# FASCICULE DE BREVET EUROPEEN

(11) **EP 3 095 831 B1**
(45) Date de publication et mention de la délivrance du brevet: **10.03.2021**
(21) Numéro de dépôt: 16170644.5
(22) Date de dépôt: 20.05.2016
(51) Int. Cl.: C09K 5/14, E04F 13/18, E04F 15/10

(54) **UTILISATION D'UN COMPOSÉ À TRANSITION DE SPIN POUR AUGMENTER L'INERTIE THERMIQUE D'UN REVÊTEMENT DE SOL OU DE MUR**
VERWENDUNG EINER SPIN-ÜBERGANGSVERBINDUNG ZUR ERHÖHUNG DER THERMISCHEN TRÄGHEIT EINES BODEN- ODER WANDBESCHICHTUNGEN
USE OF A SPIN TRANSITION COMPOUND TO INCREASE THE THERMAL INERTIA OF A FLOOR OR WALL COVERING

(30) Priorité: 22.05.2015 FR 1554646
(43) Date de publication de la demande: 23.11.2016
(73) Titulaire: GERFLOR, 69100 Villeurbanne (FR)
(72) Inventeur: FERLAY, Charles, 69770 MONTROTTIER (FR); CEYSSON, Olivier, 84500 BOLLENE (FR)
(74) Mandataire: Cabinet Laurent & Charras

(56) Documents cités:
- WO-A1-2014/171444
- JP-A- H0 886 079
- US-A1- 2007 286 971
- US-A1- 2012 010 030
- OLIVIER ROUBEAU ET AL: "Calorimetric Investigation of Triazole-Bridged Fe(II) Spin-Crossover One-Dimensional Materials: Measuring the Cooperativity", JOURNAL OF PHYSICAL CHEMISTRY PART B: CONDENSED MATTER, MATERIALS, SURFACES, INTERFACES & BIOPHYSICAL, vol. 115, no. 12, 31 mars 2011 (2011-03-31), pages 3003-3012, XP055260708, US ISSN: 1520-6106, DOI: 10.1021/jp109489g

## Description

### DOMAINE DE L'INVENTION

La présente demande concerne un revêtement de sol ou de mur intégrant un composé à inertie thermique d'un nouveau type, présentant de nombreux avantages par rapport aux matériaux à changement de phase couramment utilisés.

### ETAT ANTERIEUR DE LA TECHNIQUE

La température idéale d'une pièce ou d'un bâtiment se situe en général entre 16 et 27°C et dépend à la fois de sa construction et de son aménagement (humidité, utilisation, ...), mais aussi du ressenti de ses occupants (âge, activité, vêtements, ...).

Dans des bâtiments de faible inertie (par exemple en bois), l'obtention et le maintien de cette gamme de températures nécessitent des installations performantes (chauffage, climatisation, ventilation, ....) et présentent un coût élevé de fonctionnement, avec un impact environnemental important.

Dans ce cadre, l'inertie thermique, c'est-à-dire la capacité d'un matériau à absorber, stocker et relarguer la chaleur, représente une option de gestion passive de la température d'une pièce ou d'un bâtiment.

Ainsi, il a été recherché des matériaux présentant de bonnes propriétés d'inertie thermique pour leur intégration dans des revêtements, en particulier des revêtements de mur ou de sol.

Des matériaux présentant de telles propriétés sont les matériaux à changement de phase (ou MCP), par exemple les paraffines : en dessous de leur température de transition de phase, avantageusement égale à 23°C, le matériau est à l'état solide ; en cas de réchauffement de la pièce, le matériau passe de l'état solide à l'état liquide en absorbant la chaleur de la pièce, qui est stockée puis relarguée par le matériau lorsqu'il redevient solide, à une température inférieure à la température de changement de phase. Ceci implique bien sûr une tenue mécanique du revêtement, même lorsque le matériau est sous forme liquide.

C'est ainsi qu'à titre d'exemple, la société DuPont commercialise un produit appelé Energain®, à savoir des panneaux muraux ou à poser au plafond, constitués de gélules de cire de paraffine ensachées de manière étanche par un composant copolymère, et insérées entre deux couches d'aluminium.

De manière plus élaborée, le document EP 2 133 633 propose des revêtements pariétaux bicouches, la couche externe comprenant le matériau à changement de phase et la couche inférieure permettant la circulation de l'air. La couche externe peut être constituée de microcapsules de paraffine avec une température de fusion comprise entre 20 et 26°C, dans un matériau polymère, typiquement du PVC et un plastifiant (plastisol). Il peut s'agir d'un papier peint.

Le document WO 2012/028239 décrit un revêtement de sol comprenant une couche supérieure d'usure liée à une couche inférieure comprenant un composé à inertie thermique, en pratique un matériau à changement de phase tel que le produit Micronal® commercialisé par la société BASF.

Toutefois, les produits de type MCP présentent un certain nombre d'inconvénients :
- Leur prix élevé qui, combiné à la quantité importante nécessaire pour atteindre une efficacité thermique satisfaisante, aboutit à des produits finis coûteux ;
- Leur incorporation en grande quantité dans des matrices thermoplastiques pose problème en raison des contraintes thermiques et mécaniques associées ;
- La paraffine, qui est le MCP le plus couramment utilisé, est très inflammable. Il est donc nécessaire de l'incorporer à l'intérieur ou derrière une couche intumescente, ce qui fait chuter drastiquement ses performances thermiques ;
- Il existe un vieillissement « chimique » de ce type de matériaux, lié aux cycles de fusion et de cristallisation, limitant ainsi la durée de vie des produits finis ;
- Il existe également un vieillissement « mécanique » de ce type de produit : lors d'une utilisation dans une matrice rigide, il se produit une rupture thermique entre la matrice et le matériau, liée aux variations de volume du matériau lors des changements de phase ;
- Le recyclage des produits incorporant ce type de matériau est difficile, voire impossible dans le cas des revêtements de sol résilients.

Le document US 2012/010030 préconise d'utiliser un composé à transition de spin, en raison de sa capacité à changer de couleur en fonction de la température, pour réaliser des bandes de marquage de terrains sportifs. Dans le document JP H08 86079, la couche contenant le composé responsable de la coloration en fonction de la température est déposée sur un support en bois.

ROUBEAU et al. (The Journal of Physical Chemistry Part B, 2011, 115(12), pages 3003-3012) ont étudié le comportement calorimétrique de composés de formule [Fe(Rtrz)₃]A₂.

Le document WO 2014/171444 rapporte la capacité d'un composé de formule V₁₋ₓCrₓO₂ à stocker la chaleur et la possibilité de l'utiliser en tant que tel comme accumulateur thermique.

Il existe un besoin évident de développer des solutions techniques permettant d'améliorer les performances thermiques des bâtiments et ainsi de réaliser des économies d'énergie et de réduire les émissions de CO₂.

### EXPOSE DE L'INVENTION

La demande divulgue l'utilisation d'un composé à transition de spin pour la réalisation d'un revêtement de sol ou de mur présentant une inertie thermique améliorée.

On appelle « matériau à changement de phase », tout matériau capable de changer d'état physique dans une plage de températures restreinte. Dans cet intervalle de températures, le changement de phase prépondérant est la fusion (liquéfaction) / solidification (cristallisation).

On entend par « revêtement », un matériau ou une structure monocouche ou multicouche destiné à recouvrir une surface. Dans le cadre de la demande, on entend par surface d'une enceinte, en d'autres termes d'une pièce ou d'un bâtiment, le sol, les murs et le plafond. Un tel revêtement peut être déposé directement sur cette surface ou être déposé sur une sous-couche. De même, un tel revêtement peut constituer le revêtement final ou être utilisé comme sous-couche et donc être recouvert d'une autre couche ou d'un autre revêtement, par exemple décoratif. Dans la suite de la description, la terminologie « revêtements de sol ou de mur » va être utilisée pour couvrir ces différentes possibilités.

Dans le cadre de la demande, un composé à inertie thermique présente une capacité à absorber, stocker et libérer la chaleur. Plus précisément, le composé mis en œuvre présente les caractéristiques suivantes :
Il s'agit d'un matériau solide qui ne subit pas de changement de phase à une température inférieure ou égale à la température maximale que peut atteindre l'enceinte dans laquelle le revêtement est disposé. En pratique, cette température ne dépasse pas la température de 40°C. Cependant et comme déjà dit, cette température dépend du type de construction de l'enceinte, de l'activité à l'intérieur de l'enceinte, du climat extérieur... Ainsi et de manière adaptée, un tel composé ne subit pas de changement de phase à une température inférieure ou égale à 40°C.

Selon un mode de réalisation avantageux, ce matériau ne subit pas de changement de phase à une température inférieure ou égale à 100°C, voire inférieure ou égale à 200°C. Ceci permet de s'assurer que le matériau ne change pas de phase dans le cadre de l'utilisation du revêtement, mais également lors du procédé de fabrication ou de pose du revêtement, au cours duquel certaines étapes peuvent nécessiter des montées en température ou un chauffage du revêtement (calandrage, gélification, enduction, ...).

En effet et à titre d'exemple, les étapes de transformation des revêtements de sols résilients à base de PVC ou de tout autre polymère thermoplastique font intervenir des températures comprises entre 120 et 200°C à des pressions pouvant atteindre 0 MPa en enduction et jusqu'à 100 MPa lié au malaxage de la matière en extrusion ou en calandrage.

Selon une autre caractéristique, ledit composé présente des caractéristiques d'inertie thermique adaptées à l'application envisagée.

Selon une première caractéristique, le composé visé dans la présente demande présente une valeur de chaleur latente non nulle dans une gamme de températures comprise entre 10 et 30°C, avantageusement entre 21 et 26°C, encore plus avantageusement entre 22 et 24°C, par exemple égale à 23°C.

La chaleur latente correspond à la quantité de chaleur que peut emmagasiner un composé ou un matériau par rapport à son poids. L'unité de chaleur latente est le Joule/kg (J/kg). En pratique, plus la chaleur latente est importante, plus la quantité de chaleur que peut stocker le composé ou le matériau est grande et plus son échauffement est ralenti.

La chaleur latente pour un composé ou un matériau donné est établie en déterminant la quantité de chaleur emmagasinée par ce composé ou matériau en fonction de la température à laquelle est soumis ledit composé ou matériau, par exemple à l'aide de la technique appelée « calorimétrie différentielle à balayage » (ou DSC pour « Differential Scanning calorimetry »). Plus la surface sous le pic de changement d'état est grande, plus la chaleur latente est importante. Dans le cadre de la demande, une chaleur latente maximale est recherchée, en particulier dans la gamme de températures d'intérêt.

Selon une autre caractéristique privilégiée, ledit composé présente un pic de chaleur latente à une température comprise entre 10 et 30°C, avantageusement entre 21 et 26°C, encore plus avantageusement entre 22 et 24°C, par exemple égale à 23°C.

Plus précisément, le pic de chaleur latente correspond à la chaleur latente maximale observée à une température donnée. Ce pic est également appelé « pic de transition » dans la mesure où il marque la transition entre l'augmentation puis la diminution de la valeur de la capacité calorifique. Le composé à inertie thermique est avantageusement choisi de sorte que le pic est observé à une température à laquelle l'enceinte où est placé le revêtement selon la demande est le plus souvent exposée. En pratique, cette température est généralement comprise entre 10 et 30°C, avantageusement entre 21 et 26°C, encore plus avantageusement entre 22 et 24°C, par exemple égale à 23°C.

Un autre critère important est l'hystérésis (ou hystérèse ou effet mémoire), qui correspond à la propriété d'un système qui tend à demeurer dans un certain état quand la cause extérieure qui a produit le changement d'état a cessé. Dans le cadre de la demande, il est important de vérifier que le composé ou le matériau sélectionné est capable de « libérer » ou « relarguer » la chaleur emmagasinée lorsque la température redescend. En pratique, la détermination de la quantité de chaleur emmagasinée par le composé ou le matériau est réalisée en montée en température puis en descente, pour vérifier la température de retour à l'état initial.

Ainsi et de manière adaptée, le composé visé dans la présente demande présente une valeur de chaleur latente non nulle dans une gamme de températures comprise entre 10 et 30°C, avantageusement entre 21 et 26°C, encore plus avantageusement entre 22 et 24°C, par exemple égale à 23°C, aussi bien lors de la montée que de la descente en température.

En raison du phénomène d'hystérésis, la température, appelée T1, à laquelle le pic est observé lorsqu'on chauffe le composé peut être différente de celle, appelée T2, à laquelle le pic est observé lorsqu'on refroidit le composé (en descente en température). Ainsi, T1 ou T2, avantageusement T1 et T2, sont comprises entre 10 et 30°C, avantageusement entre 21 et 26°C, encore plus avantageusement entre 22 et 24°C, par exemple égales à 23°C.

Une autre caractéristique d'intérêt est la vitesse à laquelle l'augmentation de la capacité calorifique est observée. En pratique, celle-ci est reflétée par la largeur du pic de transition. De manière avantageuse, la largeur de ce pic est inférieure ou égale à 10°C, voire 5°C. En d'autres termes, il est avantageux que le pic du composé ou du matériau mis en œuvre dans le cadre de la demande soit fin.

Selon un premier mode de réalisation, le composé à inertie thermique mis en œuvre dans le cadre de la demande est un composé à changement ou transition de spin.

Ces composés ont la propriété de posséder 2 configurations électroniques différentes, BS (Bas Spin) et HS (haut Spin), qui commutent sous l'effet d'une perturbation extérieure telle que notamment température, pression, lumière. Ces composés sont surtout étudiés pour leur intérêt dans le stockage de l'information (mémoire) ou pour leurs propriétés thermochromiques.

Dans le cadre de la présente demande et de manière tout à fait étonnante, il a été mis en évidence que ce changement de configuration électronique lié à une variation de la température était associé à des propriétés de chaleur latente exploitables dans l'application visée par la présente demande.

Les composés à transition de spin les plus étudiés sont ceux à base d'ions métalliques, en particulier à base de fer.

Ainsi les composés utilisés dans le cadre de la présente demande comprennent du fer, et plus préférentiellement le ligand triazole ou pyrazine, éventuellement substitué. Avantageusement, il s'agit des composés suivants de formule (I) et (II), respectivement :

(I) Fe(R-trz)₃R'₂

avec
trz représentant le ligand triazole
R, un substituant du ligand triazole (trz), représentant avantageusement un atome d'hydrogène ou un groupe choisi parmi les groupes amino ou alkyle en C2-C10, et
R' étant un anion avantageusement choisi parmi NO³⁻, BF⁴⁻, Br⁻, Cl⁻ ou p-toluènesulfonate (p-tol) ; ou

(II) Fe(pz)M(CN)₄

avec
pz représentant le ligand pyrazine ; et
M représentant un métal avantageusement choisi parmi Pt, Pd et Ni.

Selon un mode de réalisation particulier, le substituant du groupe triazole est situé en position 4 du groupe triazole. Des exemples de tels composés sont : Fe(4-NH₂-trz)₃(NO₃)₂, Fe(4-NH₂-trz)₃(BF₄)₂, Fe(4-NH₂-trz)₃Br₂, [Fe(4-n-butyl-trz)₃][p-tol]₂, [Fe(4-n-pentyl-trz)₃][p-tol]₂, [Fe(4-n-hexyl-trz)₃][p-tol]₂, [Fe(4-n-heptyl-trz)₃][p-tol]₂, [Fe(4-n-heptyl-trz)₃]Br₂, Fe(pz)Pt(CN)₄, Fe(pz)Pd(CN)₄, Fe(pz)Ni(CN)₄.

Ainsi et de manière avantageuse, le composé à transition de spin est un oxyde métallique, par exemple un oxyde de fer, avantageusement de formule [Fe(Rtrz)₃]A₂, avec R un substituant du ligand triazole et A un anion.

Selon un second mode de réalisation, le composé mis en œuvre dans le cadre de la demande est un composé organique thermochromique. Dans de tels composés, la structure chimique et/ou cristalline est modifiée en fonction de la température. Selon un mode de réalisation particulier, le composé choisi, de nature organique, subit un changement d'état qui se traduit par un changement de couleur dans la gamme de températures visée, à savoir avantageusement entre 10 et 30°C, voire entre 21 et 26°C, voire même entre 22 et 24°C, par exemple à 23°C.

Ainsi et selon ce mode de réalisation, le composé à inertie thermique est un composé organique thermochromique, tel que les produits SUNTOUCH® vendu par la société SUN CHEMICAL ou CHROMICOLOR® de la société MATSUI COLOR. De tels composés peuvent être encapsulés, par exemple à l'aide d'un enrobage polymérique.

Dans le domaine du revêtement de sol, ce type de composé est généralement utilisé comme pigment à titre décoratif. Ainsi et selon cet usage, il peut être intégré à faible teneur, généralement comprise entre 1 et 10% massique de la couche dans laquelle il est intégré. Une telle couche, avantageusement de surface (dite « d'usure ») a généralement une épaisseur variant de 0,02 mm à 3 mm.

Il ressort de ce qui précède que ces deux types de composés (composé à transition de spin et composé organique thermochromique) étaient certes connus mais pas leurs propriétés de chaleur latente, encore jamais exploitées dans le domaine des revêtements de sol et de mur. En particulier, rien ne laissait présager que ces propriétés d'intérêt puissent être conservées lors de la mise en œuvre de ces composés dans un revêtement de sol ou de mur, comprenant une ou plusieurs couches par exemple de nature polymérique. Selon un autre aspect, la demande divulgue donc l'utilisation de ces matériaux pour la réalisation d'un revêtement de sol ou de mur destinés à un bâtiment, pour augmenter ou améliorer l'inertie thermique dudit revêtement et donc dudit bâtiment.

Plus précisément, la demande divulgue l'utilisation d'un composé à transition de spin pour conférer de l'inertie thermique à un revêtement de sol ou de mur, voire pour augmenter ou améliorer l'inertie thermique d'un revêtement de sol ou de mur. Comme déjà dit, on entend par inertie thermique d'un revêtement sa capacité à absorber, stocker et relarguer la chaleur.

Ainsi, l'invention concerne l'utilisation d'un composé à transition de spin de formule [Fe(Rtrz)₃]A₂, avec R un substituant du ligand triazole et A un anion, pour augmenter l'inertie thermique d'un revêtement de sol ou de mur dans lequel le composé est intégré dans au moins une couche du revêtement, ladite couche comprenant :
- au moins 20% en poids du composé ;
- du polychlorure de vinyle (PVC) ;
- des charges minérales.

Un composé à transition de spin adapté à l'utilisation, objet de la présente demande, est comme décrit ci-dessus. En particulier et de manière avantageuse, le composé à transition de spin présente au moins une des caractéristiques listées ci-dessous avantageusement l'ensemble de ces caractéristiques :
- Il s'agit d'un matériau solide qui ne subit pas de changement de phase à une température inférieure ou égale à 40°C, avantageusement inférieure ou égale à 100°C, encore plus avantageusement inférieure ou égale à 200°C ;
- Il s'agit d'un oxyde métallique, avantageusement un oxyde de fer, encore plus avantageusement de formule [Fe(Rtrz)₃]A₂, avec R un substituant du ligand triazole et A un anion ;
- Dans la mesure où le changement de couleur peut être désavantageuse dans l'utilisation visée, il peut être non thermochromique, c'est-à-dire que la transition de spin n'est pas associée à un changement de couleur ;
- Il présente une valeur de chaleur latente non nulle dans une gamme de températures comprise entre 10 et 30°C, avantageusement entre 21 et 26°C, encore plus avantageusement entre 22 et 24°C, par exemple égale à 23°C ;
- Il présente un pic de chaleur latente à une température comprise entre 10 et 30°C, avantageusement entre 21 et 26°C, encore plus avantageusement entre 22 et 24°C, par exemple égale à 23°C.

De manière aisée pour l'homme du métier, la formule des composés à transition de spin connus peut être modifiée de sorte qu'ils présentent une ou plusieurs des caractéristiques listées ci-dessus.

Selon un mode de réalisation particulier, le composé n'est pas de formule V₁₋ₓCrₓO₂, en particulier avec 0<x≤0.23.

De manière avantageuse, le revêtement de sol ou de mur visé par la demande et comprenant le composé à transition de spin présente une ou plusieurs des caractéristiques suivantes, qui peuvent dépendre du composé à transition de spin mis en œuvre, de sa quantité et/ou de son environnement :
- Il présente une valeur de chaleur latente non nulle dans une gamme de températures comprise entre 10 et 30°C, avantageusement entre 21 et 26°C, encore plus avantageusement entre 22 et 24°C, par exemple égale à 23°C ;
- Il présente un pic de chaleur latente à une température comprise entre 10 et 30°C, avantageusement entre 21 et 26°C, encore plus avantageusement entre 22 et 24°C, par exemple égale à 23°C .

De manière avantageuse, le revêtement de sol ou de mur selon l'invention présente une capacité de chaleur latente adaptée à l'application visée. En pratique, cette capacité dépend des propriétés intrinsèques de chaleur latente du composé mis en œuvre mais également de la quantité du matériau présent dans le revêtement.

De manière préférentielle, un tel revêtement présente une capacité d'inertie thermique (ou valeur de chaleur latente) supérieure ou égale à 10 kJ/kg, avantageusement supérieure ou égale à 50 kJ/kg, voire supérieure ou égale à 100, 200, 300, 400, 500, 600, 700, 800, 900 ou même 1000 kJ/kg.

De manière avantageuse, ces valeurs caractérisent le revêtement dans la gamme de températures d'intérêt, c'est-à-dire préférentiellement comprise entre 10 et 30°C, avantageusement entre 21 et 26°C, encore plus avantageusement entre 22 et 24°C.

Selon un mode de réalisation particulier, un tel revêtement présente une masse surfacique comprise entre 0,5 et 10 kg/m², avantageusement comprise entre 1 et 5 kg/m², par exemple de l'ordre de 3 kg/m².

Selon une autre caractéristique avantageuse, le revêtement présente une épaisseur supérieure ou égale à 1 mm, voire 2 mm, voire même 3 mm. Ainsi, cette épaisseur peut être comprise entre 1 et 10 mm, avantageusement comprise entre 2 et 8 mm, encore plus avantageusement comprise entre 4 et 5 mm.

Selon l'invention, ce revêtement peut aussi bien se présenter sous la forme d'un monocouche qu'un multicouche.

Dans le sens de l'invention, on entend par multicouche, le fait que la structure associée possède au moins deux couches, en plus du support d'enduction qui peut persister ou non dans le produit fini. Avantageusement, un multicouche comprend de 2 à 4 couches d'épaisseur désirée. Il peut s'agir d'un revêtement non textile, même si une ou des couches inférieures peuvent être des couches de renfort contenant des fibres.

Classiquement et dans le cas d'un revêtement de sol, la couche supérieure, c'est-à-dire la couche en contact avec l'utilisateur appelée couche d'usure, présente la plus faible épaisseur, en général comprise entre 0,1 à 2 mm, avantageusement de 0,3 à 1 mm. Celle-ci peut intégrer ou avoir à sa surface des éléments de décoration : pigments colorés, granulés, impression.

Les couches inférieures, également appelées sous-couches, servent à la structuration du revêtement et peuvent également avoir d'autres fonctions telles que l'amortissement du bruit, l'antidérapance, la souplesse, l'isolation, la résistance mécanique ...

Le composé à inertie thermique, avantageusement à transition de spin, est intégré dans au moins une couche d'un multicouche, voire dans toutes les couches du revêtement.

Selon un mode de réalisation particulier, le revêtement n'est pas un monocouche ou ne comprend pas le composé à transition de spin uniquement au niveau de la couche supérieure d'un multicouche.

De manière avantageuse, les caractéristiques de la couche ou des couches du revêtement de sol ou de mur selon la présente demande sont les suivantes :
Au niveau de leur composition, elles comprennent classiquement un polymère. Elles peuvent en outre contenir au moins un additif choisi dans le groupe suivant : plastifiants, charges minérales, stabilisants thermiques ou UV, agents dessicants, lubrifiants, agents de mise en œuvre (« processing aids »), pigments, ignifugeants.

Les charges minérales peuvent être choisies dans le groupe comprenant le carbonate de calcium, les craies, le kaolin, le sulfate de baryum, le talc, les trihydrates d'aluminium, de la farine de bois ou de liège, ou de la silice.

Les plastifiants peuvent être choisis dans le groupe comprenant les orthophtalates de haut poids moléculaire comme le DIDP (di-iso-décyl phatlate), les téréphtalates, les sébaçates (par exemple le sébaçate de dibutyle ou DBS), les adipates.

Le polymère le plus classiquement utilisé est le polychlorure de vinyle (PVC), éventuellement en combinaison avec du polyvinylbutyrate (PVB), ou le polyvinyl acétate (PVA). Le polyuréthane (PU) est également une alternative au PVC, par exemple obtenu par réticulation entre l'huile de ricin ou le glycérol et un isocyanate, tel que décrit dans le brevet EP 2 307 609. Une autre alternative concerne l'utilisation de linoléum.

Selon un mode de réalisation particulier, le composé à inertie thermique, avantageusement le composé à transition de spin, est intégré dans une base polymérique, avantageusement à base de PVC. Selon un autre mode de réalisation, la base polymérique ne contient pas de polyuréthane. Cette base ou matrice peut en outre contenir au moins un additif choisi dans la liste énumérée ci-dessus.

De manière avantageuse, la base ou matrice dans laquelle est intégré le composé ne modifie pas ses propriétés d'inertie thermique.

Afin d'obtenir la capacité calorifique recherchée pour le revêtement dans le cadre de l'invention, la proportion massique du composé à inertie thermique, avantageusement du composé à transition de spin, dans la ou les couches peut être ajustée. Ainsi et de manière avantageuse, le composé représente au moins 20% en poids de la couche, voire 30, 40, 50, 60, 70 voire même 80% en poids de la couche.

Selon un mode de réalisation avantageux, le revêtement selon l'invention est constitué d'au moins 20% en poids du composé, voire 30, 40, 50, 60, 70 voire même 80%.

En d'autres termes, la proportion massique du composé par rapport à la ou les couches le comprenant, voire par rapport au revêtement, est avantageusement supérieure ou égale à 20%, voire 30, 40, 50, 60, 70 voire même 80 ou 90%.

Selon un autre aspect, la demande divulgue une composition destinée à la réalisation de la couche comprenant le composé à inertie thermique, avantageusement le composé à transition de spin, et donc au revêtement de sols ou de murs incorporant une telle couche.

En pratique, une telle composition comprend avantageusement :
- un composé tel que défini ci-dessus ;
- au moins un polymère tel que défini ci-dessus, avantageusement du PVC ;
- éventuellement au moins un additif tel que défini ci-dessus.

La préparation de la composition peut comprendre des étapes d'homogénéisation et de malaxage selon des techniques faisant partie des connaissances de l'homme du métier.

Dans le cas d'un multicouche, l'association des différentes couches se fait à l'aide des techniques classiques, bien connues de l'homme du métier, avantageusement choisies parmi : l'enduction, l'extrusion,le calandrage ou la lamination. Ces techniques sont par exemple décrites dans le document EP 2 133 633.

Ces techniques peuvent nécessiter des montées en température ou chauffage (supérieures à 100°C, voire à 180°C), qui doivent cependant être compatibles avec le composé à inertie thermique mis en œuvre, qui ne doit pas changer de phase à cette température.

Si possible, la cohérence ou le collage entre les couches peut être renforcé par l'ajout de couches adhésives.

Comme il ressort, les composés à inertie thermique, avantageusement les composés à transition de spin proposés dans le cadre de la présente demande, offrent de nombreux avantages en rapport avec l'application visée par rapport aux matériaux à changement de phase :
- Produits résistants aux contraintes de transformation des polymères, notamment en termes de température et de cisaillement ;
- Produits inertes au feu ;
- En l'absence de changement de phase, pas de vieillissement mécanique ;
- Incorporation en grande quantité possible dans les matrices polymériques ;
- Recyclage du produit aisé.

### EXEMPLES DE REALISATION DE L'INVENTION

Les exemples de réalisation qui suivent, à l'appui des figures annexées, ont pour but d'illustrer l'invention et les avantages qui en découlent, mais n'ont aucune portée limitative.

### LEGENDES DES FIGURES

Figure 1 : Mesure de la chaleur latente du matériau à changement de phase Micronal® (BASF), en fonction de la température (à raison d'une variation de 5°C par minute)
Figure 2 : Mesure de la chaleur latente d'un produit correspondant à un mélange d'une matrice à base d'huile de ricin et du matériau à changement de phase Micronal® (BASF) en fonction de la température (à raison d'une variation de 5°C par minute)
Figure 3 : Mesure de la chaleur latente d'un produit correspondant à un mélange d'une résine et d'un composé à transition de spin en fonction de la température (à raison d'une variation de 5°C par minute), au cours d'un premier cycle thermique (C1)
Figure 4 : Mesure de la chaleur latente d'un produit correspondant à un mélange d'une résine et d'un composé à transition de spin en fonction de la température (à raison d'une variation de 5°C par minute), au cours d'un second cycle thermique (C2)
Figure 5 : Mesure de la chaleur latente d'un pigment organique thermochrome Suntouch® (SUN) en fonction de la température (à raison d'une variation de 5°C par minute)

### Exemple 1 : Revêtement à base d'un matériau à changement de phase selon l'art antérieur :

Le composé à inertie thermique utilisé est un matériau à changement de phase (MCP), à savoir le Micronal® commercialisé par la société BASF. Il s'agit d'une paraffine dont le point de fusion peut être égal à 21, 23 ou 26°C, en fonction de la longueur de chaine.

Il présente une chaleur latente de 22 J/mol. La paraffine étant liquide au-dessus de sa température de transition de phase, celle-ci est encapsulée dans une capsule polymérique en PMMA (PolyMéthacrylate de Méthyle).

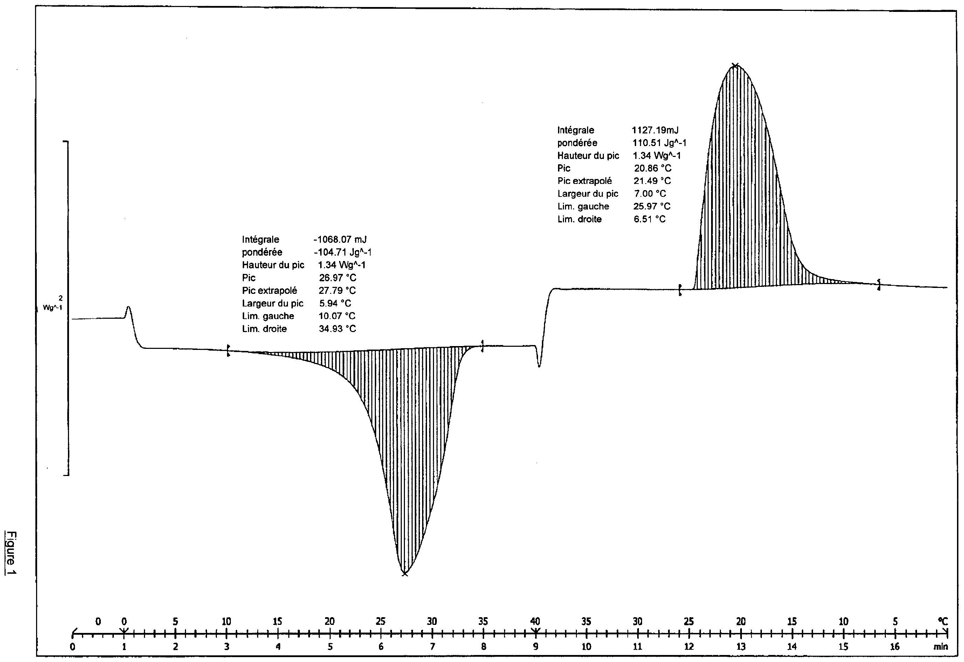

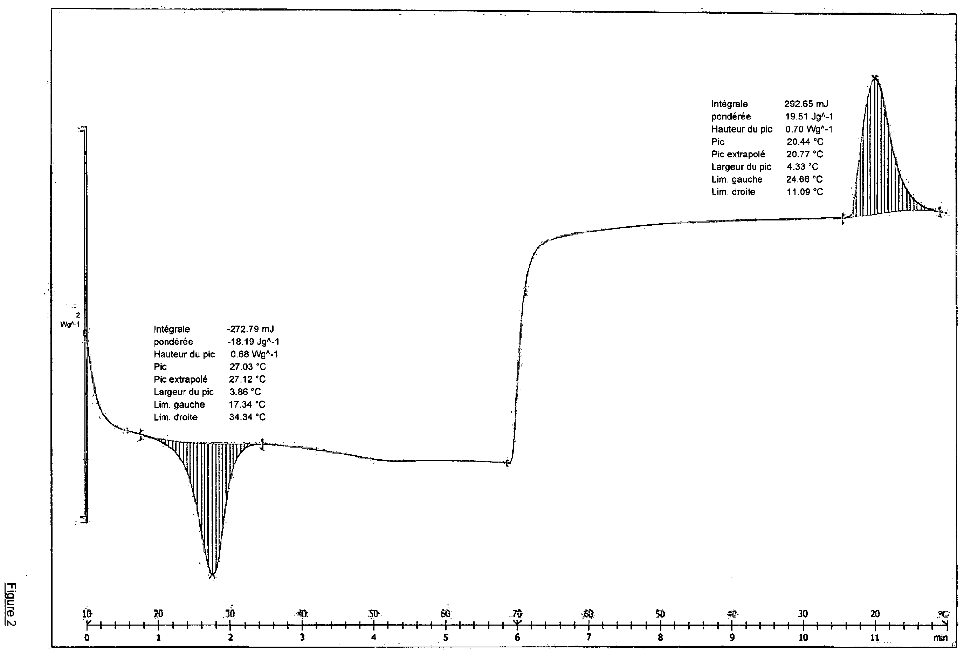

Ce produit a été caractérisé en termes de chaleur latente :
- Pour le MCP seul (Figure 1) ;
- Pour une matrice à base d'huile de ricin, comme décrite dans le document EP 2 307 609 et chargée à 20% massique en MCP (Figure 2).

### Composition du produit testé à la figure 2 (% en masse) :

- Huile de ricin à hauteur de 0 à 80 % ;
- Glycérol à hauteur de 0 à 20% ;
- Isocyanate à hauteur de 10 à 30% ;
- Catalyseur à hauteur de 0 à 1% ;
- Micronal® (MCP) à hauteur de 20%.

### Préparation du produit testé à la figure 2 :

La transformation de ce produit est équivalente aux produits PVC fabriqués par enduction :
Toutes les matières premières liquides (huile de ricin, glycérol, isocyanate et catalyseur) sont mélangées à l'aide du mélangeur rapide de type Raynerie.
La charge solide, Micronal®, est ajoutée progressivement pendant le mélange des liquides.

La pâte ainsi obtenue est ensuite enduite sur une feuille de papier transfert siliconée et chauffée de 1 à 10 min entre 80 et 220°C.
Le produit obtenu est une feuille polymère, solide, de 1 mm d'épaisseur.

### Analyse du produit testé à la figure 2 :

Les thermogrammes correspondants sont établis à l'aide d'une DSC (« Differential scanning calorimeter »), les paramètres d'évaluation sont précisés ci-après. Les résultats ont été obtenus après étalonnage de l'appareil à l'aide de l'indium et du zinc. Grâce à cette méthode, il est possible de suivre la fusion de la paraffine présente dans les microcapsules. Cette fusion engendre un pic endothermique lié au changement de phase. L'aire sous le pic permet de calculer la chaleur latente correspondante.

Les résultats sont illustrés aux Figures 1 et 2, respectivement.

### Figure 1 :

a) En montée en température (de 0 à 40°C à raison de 5°C par minute) :
   Intégrale : - 1068,07 mJ
   Pondérée : - 104,71 J/g
   Pic à 26,97°C (27,79°C en extrapolé)
   Largeur du Pic : 5,94°C
b) En descente en température (de 40 à 0°C à raison de 5°C par minute) :
   Intégrale : 1127,19 mJ
   Pondérée : 110,51 J/g
   Pic à 20,86°C (21,49°C en extrapolé)
   Largeur du Pic : 7°C

### Figure 2 :

a) En montée en température (de 0 à 40°C à raison de 5°C par minute) :
   Intégrale : - 272,79 mJ
   Pondérée : - 18,7119 J/g
   Pic à 27,03°C (27,12°C en extrapolé)
   Largeur du Pic : 3,86°C
b) En descente en température (de 40 à 0°C à raison de 5°C par minute) :
   Intégrale : 292,65 mJ
   Pondérée : 19,51 J/g
   Pic à 20,44°C (20,77°C en extrapolé)
   Largeur du Pic : 4,33°C

### Conclusions :

Il ressort de la figure 1 que le produit Micronal® possède une chaleur latente de 105 J/g avec une hystérèse de 6°C (température de fusion de 26°C et température de cristallisation de 20°C).

La matrice à base d'huile de ricin mise en œuvre apparaît comme bien adaptée puisque sa fluidité permet d'intégrer une grande quantité du produit Micronal®, tout en gardant une viscosité adaptée aux procédés d'élaboration du produit fini.

La comparaison des résultats des figures 1 et 2 montre qu'il s'agit d'une loi de mélange linéaire : le produit final (matrice + 20% du produit Micronal®) présente les mêmes températures de fusion et de cristallisation, mais une chaleur latente (20 J/g) 5 fois inférieure à celle du MCP seul, en adéquation avec son incorporation à hauteur de 20%.

Pour obtenir une efficacité thermique satisfaisante, il faut donc intégrer au minimum 20% en masse du MCP, avantageusement 50%, ce qui pose notamment les problèmes de coût susmentionnés.

### Exemple 2 : Revêtement à base d'un composé à transition de spin selon l'invention :

De manière inattendue, il a été mis en évidence, dans le cadre de l'invention, qu'un pigment thermochrome à changement d'état d'énergie (spin des électrons), tel que ceux décrits dans le document WO2010/046593, possède une chaleur latente de 20 J/mol.

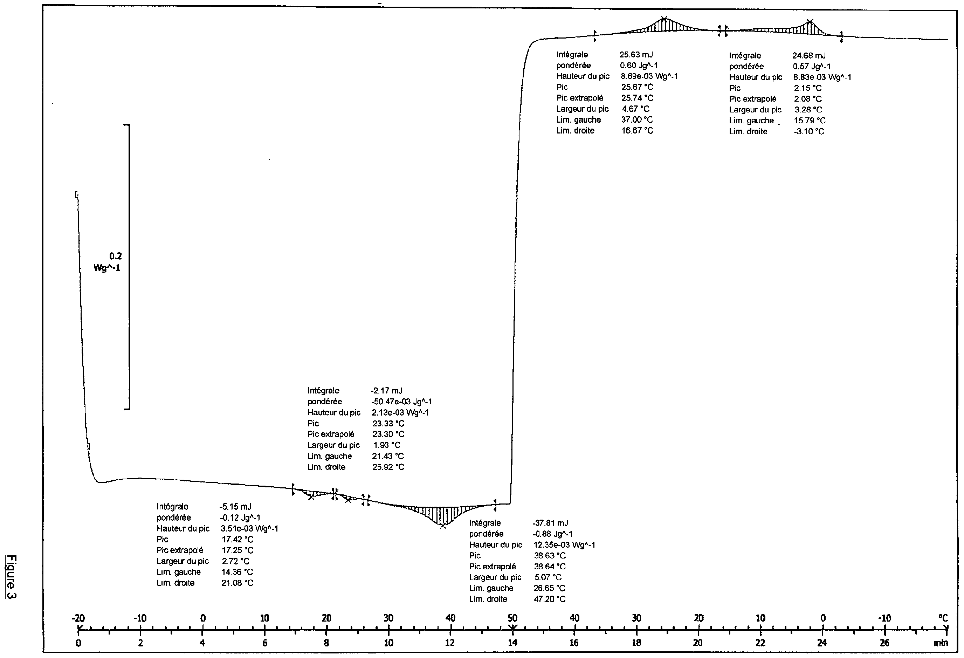

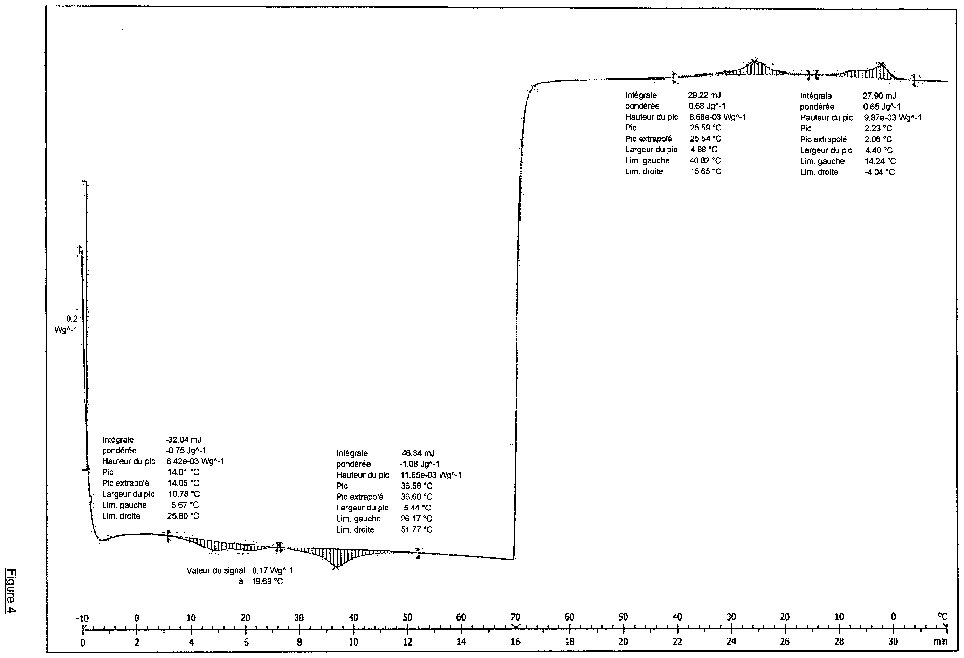

Un vernis aqueux contenant 5% en poids d'un composé à transition de spin du type [Fe(Rtrz)₃]A₂, avec R = différents substituants du ligand trz (= triazole) et A = différents anions) a permis l'établissement du thermogramme de la figure 3 (C1 : 1^{er} cycle de montée et descente en température) et de la figure 4 (C2 : 2^{nd} cycle de montée et descente en température).

Les composés décrits ci-dessus sont dispersés dans une résine polyuréthane en base aqueuse, par exemple le produit Aquaréthane (commercialisé par la société Blanchon) par des moyens classiques de type Raynerie pour avoir une bonne dispersion de la charge.

La DSC est étalonnée avec l'indium et le zinc avant la mesure. La résine est incorporée à l'état liquide. La perte de poids de l'échantillon pendant le test a été pris en compte.

### Figure 3 : Caractéristiques du pic le plus significatif

a) En montée en température (de -20 à 50°C à raison de 5°C par minute) :
   Intégrale : - 37,81 mJ
   Pondérée : - 0,88 J/g
   Pic à 38,63°C (38,64°C en extrapolé)
   Largeur du Pic : 5,07°C
b) En descente en température (de 50 à -20°C à raison de 5°C par minute) :
   Intégrale : 25,63 mJ
   Pondérée : 0,57 J/g
   Pic à 25,67°C (25,74°C en extrapolé)
   Largeur du Pic : 4,67°C

### Figure 4 : Caractéristiques du pic le plus significatif

a) En montée en température (de -10 à 70°C à raison de 5°C par minute) :
   Intégrale : - 46,34 mJ
   Pondérée : - 1,08 J/g
   Pic à 36,56°C (36,60°C en extrapolé)
   Largeur du Pic : 5,44°C
b) En descente en température (de 70 à -10°C à raison de 5°C par minute) :
   Intégrale : 29,22 mJ
   Pondérée : 0,68 J/g
   Pic à 25,59°C (25,54°C en extrapolé)
   Largeur du Pic : 4,88°C

### Conclusions :

Il ressort des figures 3 et 4 que le produit intégrant le composé à transition de spin possède une chaleur latente non négligeable, avec une gamme de température compatible avec l'application visée (température de transition de 38, 6°C en montée et de 25,7°C en descente). Même, si dans les conditions de l'expérience, la chaleur latente est relativement faible, il est possible de l'améliorer en augmentant la charge du pigment dans une matrice polymérique, par exemple en PVC.

En outre, la comparaison des figures 3 et 4 montre que les performances thermiques sont stables et reproductibles après deux cycles thermiques.

### Exemple 3 : Revêtement à base d'un composé organique thermochromique (hors invention) :

De manière inattendue, il a été mis en évidence dans le cadre de la demande qu'un pigment organique thermochromique, tel que celui commercialisé par la société SUN CHEMICAL sous la dénomination SUNTOUCH® (19057), pouvait être utilisé comme composé à inertie thermique pour des revêtements, notamment des revêtements de sol.

Le pigment a été analysé par DSC, dans les mêmes conditions d'analyse que l'exemple 1. Cependant, le pigment a été analysé pur, sans incorporation dans une matrice polymérique.

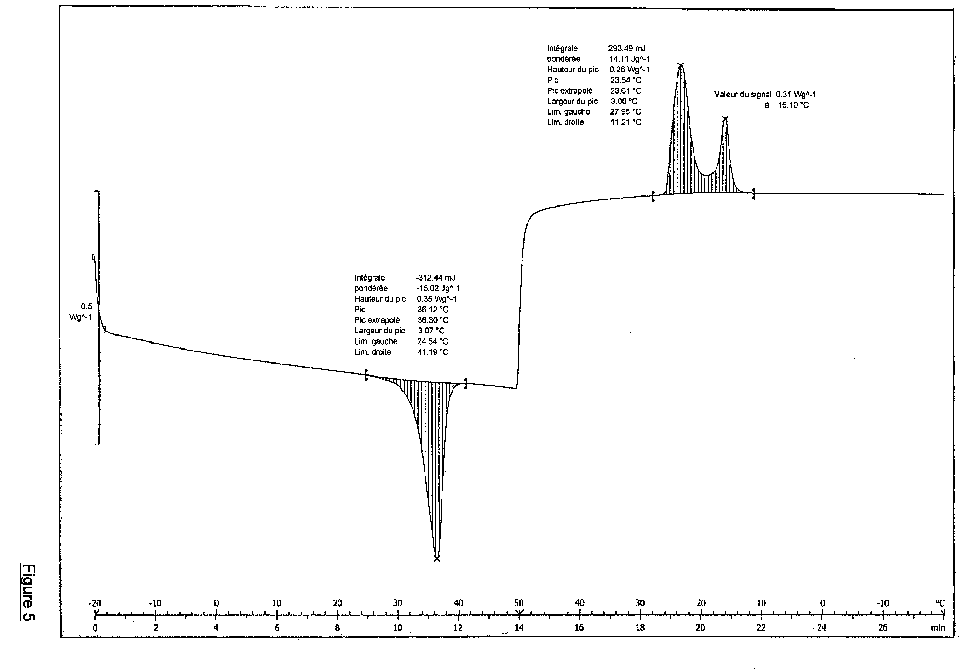

### Figure 5 : Caractéristiques du pic le plus significatif

a) En montée en température (de -20 à 50°C à raison de 5°C par minute) :
   Intégrale : - 312,44 mJ
   Pondérée : - 15,02 J/g
   Pic à 36,12°C (36,30°C en extrapolé)
   Largeur du Pic : 3,07°C
b) En descente en température (de 50 à -20°C à raison de 5°C par minute) :
   Intégrale : 293,49 mJ
   Pondérée : 14,11 J/g
   Pic à 23,54°C (23,61°C en extrapolé)
   Largeur du Pic : 3°C

### Conclusions :

Il ressort de la figure 5 que ce type de pigment possède une chaleur latente significative, avec une gamme de température compatible avec l'application visée (température de transition franche de 36°C en montée et de 23,54°C en descente).

## Revendications

1. Utilisation d'un composé à transition de spin de formule [Fe(Rtrz)₃]A₂, avec R un substituant du ligand triazole et A un anion, pour augmenter l'inertie thermique d'un revêtement de sol ou de mur dans lequel le composé est intégré dans au moins une couche du revêtement, ladite couche comprenant :
- au moins 20% en poids du composé ;
- du polychlorure de vinyle (PVC) ;
- des charges minérales.

2. Utilisation selon la revendication 1, ***caractérisée en ce que*** le composé à transition de spin ou le revêtement présente une valeur de chaleur latente non nulle dans une gamme de températures comprise entre 10 et 30°C, avantageusement entre 21 et 26°C, encore plus avantageusement entre 22 et 24°C, par exemple égale à 23°C.

3. Utilisation selon l'une des revendications précédentes, ***caractérisée en ce que*** le composé à transition de spin ou le revêtement présente un pic de chaleur latente à une température comprise entre 10 et 30°C, avantageusement entre 21 et 26°C, encore plus avantageusement entre 22 et 24°C, par exemple égale à 23°C.

4. Utilisation selon l'une des revendications précédentes, ***caractérisée en ce que*** le revêtement présente une chaleur latente supérieure ou égale à 10 kJ/kg, avantageusement supérieure ou égale à 100 kJ/kg.

5. Utilisation selon l'une des revendications précédentes, ***caractérisée en ce que*** ladite couche contient au moins 50%, voire au moins 80% en poids du composé.

6. Utilisation selon l'une des revendications précédentes, ***caractérisée en ce que*** le revêtement est constitué d'au moins 20% en poids du composé.

7. Utilisation selon l'une des revendications précédentes, ***caractérisée en ce que*** le revêtement présente une épaisseur comprise entre 1 et 10 mm, avantageusement comprise entre 2 et 8 mm, encore plus avantageusement comprise entre 4 et 5 mm.

## Patentansprüche

1. Einsatz einer Verbindung mit Spinübergang mit der Formel [Fe(Rtrz)₃]A₂, in der R ein Substituent des Triazol- Liganden und A ein Anion ist, zur Steigerung der thermische Beständigkeit eines Boden- oder Wandbelags, bei dem die Verbindung in mindestens eine Schicht des Belags integriert ist, diese Schicht enthält:
- mindestens 20 Gewichts-% der Verbindung;
- Polyvinylchlorid (PVC);
- mineralische Füllstoffe.

2. Einsatz nach Anspruch 1, ***dadurch gekennzeichnet, dass*** die Verbindung mit Spinübergang oder der Belag eine latente Wärme ungleich Null in einem Temperaturbereich zwischen 10 und 30° C aufweisen, vorteilhafterweise zwischen 21 und 26 ⁰ C, noch besser zwischen 22 und 24 ⁰ C, zum Beispiel gleich 23 ⁰ C.

3. Einsatz nach einem der vorangehenden Ansprüche, ***dadurch gekennzeichnet, dass*** die Verbindung mit Spinübergang oder der Belag eine latente Wärmespitze bei einer Temperatur zwischen 10 und 30 ° C aufweisen, vorteilhafterweise zwischen 21 und 26° C, noch besser zwischen 22 und 24° C, zum Beispiel gleich 23 ⁰ C.

4. Einsatz nach Anspruch 1, **dadurch gekennzeichnet, dass** der Belag eine latente Wärme von größer gleich 10 kJ/kg, aufweisen, vorteilhafterweise von größer oder gleich 100 kJ/kg.

5. Einsatz nach einem der vorangehenden Ansprüche, **dadurch gekennzeichnet, dass** diese Schicht mindestens 50, sogar mindestens 80 Gewichts-% der Verbindung enthält.

6. Einsatz nach einem der vorangehenden Ansprüche, **dadurch gekennzeichnet, dass** der Belag zu mindestens 20 Gewichts-% aus der Verbindung besteht.

7. Einsatz nach einem der vorangehenden Ansprüche, **dadurch gekennzeichnet, dass** der Belag eine Dicke zwischen 1 und 10 mm, vorteilhafterweise zwischen 2 und 8 mm, noch besser zwischen 4 und 5 mm aufweist.

## Claims

1. Use of a spin transition compound with formula [Fe(Rtrz)₃]A₂, in which R is a substituent of the triazole ligand and A is an anion, in order to increase the thermal inertia of a floor or wall covering in which the compound has been incorporated into at least one layer of the covering, said layer comprising:
- at least 20% by weight of the compound;
- polyvinyl chloride (PVC);
- mineral fillers.

2. Use as claimed in claim 1, ***characterized in that*** the spin transition compound or the covering has a non-zero latent heat value in a range of temperatures in the range 10°C to 30°C, advantageously in the range 21°C to 26°C, yet more advantageously in the range 22°C to 24°C, for example equal to 23°C.

3. Use as claimed in one of the preceding claims, ***characterized in that*** the spin transition compound or the covering has a peak latent heat at a temperature in the range 10°C to 30°C, advantageously in the range 21°C to 26°C, yet more advantageously in the range 22°C to 24°C, for example equal to 23°C.

4. Use as claimed in one of the preceding claims, ***characterized in that*** the covering has a latent heat which is greater than or equal to 10 kJ/kg, advantageously greater than or equal to 100 kJ/kg.

5. Use as claimed in one of the preceding claims, ***characterized in that*** said layer contains at least 50%, or even at least 80% by weight of the compound.

6. Use as claimed in one of the preceding claims, ***characterized in that*** the covering is constituted by at least 20% by weight of the compound.

7. Use as claimed in one of the preceding claims, ***characterized in that*** the covering has a thickness in the range 1 mm to 10 mm, advantageously in the range 2 mm to 8 mm, yet more advantageously in the range 4 mm to 5 mm.
